# EUROPEAN PATENT SPECIFICATION

(11) **EP 4 258 453 B1**
(45) Date of publication and mention of the grant of the patent: **15.07.2026**
(21) Application number: 22878830.3
(22) Date of filing: 30.09.2022
(51) Int. Cl.: H01M 50/533, H01M 50/54, H01M 50/178, H01M 50/536

(54) **SECONDARY BATTERY**
SEKUNDÄRBATTERIE
BATTERIE SECONDAIRE

(30) Priority: 08.10.2021 KR 20210134479
(43) Date of publication of application: 11.10.2023
(73) Proprietor: LG Energy Solution, Ltd., Seoul 07335 (KR)
(72) Inventor: KANG, Gyung-Soo, Daejeon 34122 (KR); JEONG, Jee-Hoon, Daejeon 34122 (KR); CHOI, Yong-Su, Daejeon 34122 (KR)
(74) Representative: Plasseraud IP
(86) International application number: PCT/KR2022/014812
(87) International publication number: WO 2023/059009

(56) References cited:
- WO-A1-2017/073745
- JP-A- 2007 026 945
- JP-A- 2014 167 881
- JP-B2- 5 803 713
- KR-A- 20070 099 430
- KR-A- 20110 100 583
- KR-A- 20110 100 583
- KR-B1- 102 234 993
- US-A1- 2018 019 501
- US-A1- 2018 287 124

## Description

### TECHNICAL FIELD

The present disclosure relates to a secondary battery, and more specifically, to a secondary battery having no electrode lead. The present application claims priority to Korean Patent Application No. 10-2021-0134479 filed on October 8, 2021.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such a secondary battery is attracting attention as a new energy source to improve eco-friendliness and energy efficiency in that it has not only a primary advantage of dramatically reducing the use of fossil fuels, but also no by-products generated from the use of energy.

A secondary battery is generally composed of an electrode assembly including a positive electrode, a negative electrode, and a separator interposed between the positive electrode and the negative electrode, an electrolyte delivering lithium ions, a case accommodating them, electrode tabs extending from the electrode assembly, and an electrode lead welded to the electrode tabs to become a path of a current out of the case. The electrode tabs extend from the positive electrode plate or the negative electrode plate of the electrode assembly and are electrically connected to the positive electrode and negative electrode leads, respectively, in a welded state. The electrode lead exposed to the outside of the case is electrically connected to a bus bar in a subsequent process.

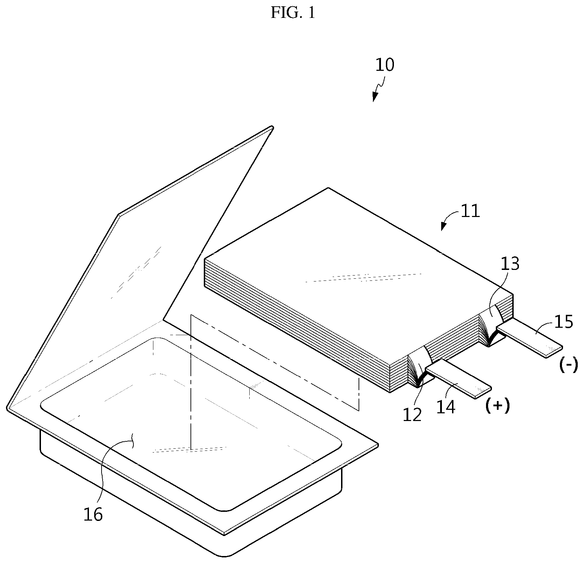

FIG. 1 is an exploded perspective view showing the configuration of a conventional secondary battery.

Referring to FIG. 1, a conventional secondary battery 10 is configured to include an electrode assembly 11, a plurality of electrode tabs 12, 13 extending from the electrode assembly 11, electrode leads 14, 15 welded to be coupled to the electrode tabs 12, 13, and a case 16 accommodating the electrode assembly 11. The electrode assembly 11 is a power generating device in which a positive electrode and a negative electrode are sequentially stacked with a separator interposed therebetween, and has a structure of a stack type, a jelly-roll type, or a stack/folding type.

The electrode tabs 12, 13 extend from each electrode plate of the electrode assembly 11, and the electrode leads 14, 15 are electrically connected to a plurality of electrode tabs 12, 13 extending from each electrode plate by welding, respectively, and are coupled in a partially exposed form to the outside of the case 16.

However, in the conventional secondary battery 10, welding resistance may be generated as the electrode tabs 12, 13 and the electrode leads 14, 15, which are different metals, are welded, and thus there is a bad problem in terms of thermal and/or electrical conductivity.

Accordingly, technology development for a secondary battery in which an electrode tab serves as an electrode lead without using the electrode lead is in progress.

Document JP 2007 026945 A relates to a battery in which a joint structure between a connection terminal fixed to a case and an electrode body is improved, and a manufacturing method thereof. Document JP 5 803713 B2 relates to a chargeable and dischargeable power storage device and a vehicle. Document WO 2017/073745 A1 relates to an electrode assembly. Document US 2018/287124 A1 relates to an energy storage device which includes an electrode assembly and conductive members or the like. Document KR 2011 0100583 discloses a secondary battery.

### DISCLOSURE

### Technical Problem

The present disclosure is designed to solve the problems of the related art, and therefore the present disclosure is directed to providing a secondary battery having improved safety by adjusting the length of the tab welding portion thereby avoiding the necessity of having an electrode lead.

### Technical Solution

A secondary battery according to claim 1.

### Advantageous Effects

Since the secondary battery does not include an electrode lead, a problem of welding resistance due to welding between the electrode tab and the electrode lead may be improved.

In the secondary battery, by adjusting the length of the tab welding portion, the contact between the electrode assembly and the electrode tab at a high temperature may be easily broken, and thus safety may be improved.

A pouch-type secondary battery is easy to increase the volume ratio, but has a disadvantage in that the pouch itself is difficult to hold the cell. When the temperature of the cell runs away, a pouch-type secondary battery has no thermal stability unlike a cylindrical battery with PTC or CID. According to the present disclosure, it is advantageous in that a safety device is provided even in a pouch-type secondary battery by providing a tab welding portion without an electrode lead and improving it to form a disconnection portion in which the electrode tab portion is cut off at a certain temperature or higher.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view showing the configuration of a conventional secondary battery.
FIG. 2 is a perspective view showing a disassembled state of an electrode assembly of a secondary battery according to an embodiment of the present invention.
FIG. 3 is a perspective view of a secondary battery according to an embodiment of the present invention.
FIG. 4 is an enlarged view showing a tab welding portion not according to an embodiment of the present invention.
FIG. 5 is an enlarged view showing a tab welding portion in an embodiment of the present invention.
FIG. 6 is an enlarged view showing a tab welding portion in still another embodiment of the present invention.
FIGS. 7 to 14 are diagrams showing the amount of deformation and stress analysis results by simulation experiments.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure as defined by the appended claims.

A secondary battery not according to the present invention includes an electrode assembly including at least one positive electrode plate having a positive electrode tab, at least one negative electrode plate having a negative electrode tab, and a separator interposed between the positive electrode plate and the negative electrode plate; and a case accommodating the electrode assembly, wherein a tab welding portion in which the positive electrode tab and the negative electrode tab are welded in a state where a plurality of identical polarities are overlapped is provided, wherein the length of the tab welding portion in an extension direction of the positive electrode tab or the negative electrode tab is constant in a thickness direction of the positive electrode tab or the negative electrode tab.

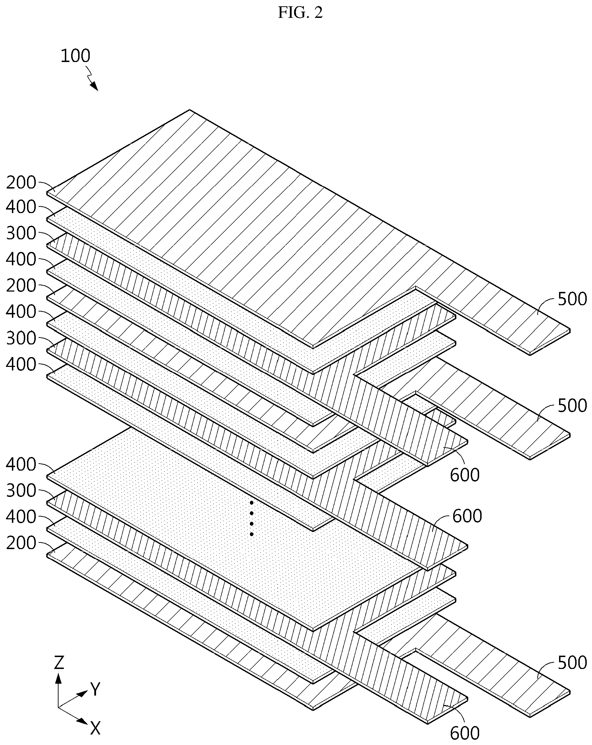

FIG. 2 is a perspective view showing a disassembled state of an electrode assembly of a secondary battery.

Referring to FIG. 2, the electrode assembly 100 is formed in a state in which a positive electrode plate 200 and a negative electrode plate 300 coated with an active material and a separator 400 interposed therebetween are stacked in a thickness direction (Z direction) of the battery. A positive electrode tab 500 is formed on the positive electrode plate 200, and a negative electrode tab 600 is formed on the negative electrode plate 300 at a position that does not overlap with an area where the positive electrode tab 500 is located.

The positive electrode tab 500 and the negative electrode tab 600 may be disposed in opposite directions with respect to the length direction (X direction) of the battery or may be located in the same direction. FIG. 2 illustrates a case where they are located in the same direction. Also, as illustrated, the positive electrode tab 500 and the negative electrode tab 600 may be located along the width direction (Y direction) of the battery.

The positive electrode tab 500 or the negative electrode tab 600 may be in the form of a band having a length longer than a width and a thickness, and the positive electrode tab 500 or the negative electrode tab 600 is seen as a rectangle when viewed from a thickness direction of the battery, wherein the short side of the rectangle is defined as the width and the long side of the rectangle is defined as the length. The thickness of the positive electrode tab 500 or the negative electrode tab 600 means the maximum value of the distance between both surfaces having a surface direction in a thickness direction of the battery.

In the drawing, the length direction of the positive electrode tab 500 or the negative electrode tab 600 is shown as the X-axis direction, and the thickness direction of the positive electrode tab 500 or the negative electrode tab 600 is shown as the Z-axis direction. In the present specification, the length of the positive electrode tab 500 or the negative electrode tab 600 refers to the length between both ends in a direction perpendicular to the width direction of the positive electrode tab 500 or the negative electrode tab 600, and means the length in an extension direction of the positive electrode tab 500 or the negative electrode tab 600.

The positive electrode plate 200 may include a positive electrode current collector made of a thin metal plate having excellent conductivity, for example, aluminum (Al) foil, and a positive electrode active material layer coated on at least one surface thereof.

The negative electrode plate 300 may include a negative electrode current collector made of a thin conductive metal plate, for example, copper (Cu) foil, and a negative electrode active material layer coated on at least one surface thereof.

The separator 400 is interposed between the positive electrode plate 200 and the negative electrode plate 300 to electrically insulate the positive electrode plate 200 and the negative electrode plate 300 from each other, and may be formed in a porous membrane shape so that lithium ions may pass through each other between the positive electrode plate 200 and the negative electrode plate 300. The separator 400 may include a porous membrane using, for example, polyethylene (PE), polypropylene (PP), or a composite film thereof.

An inorganic coating layer may be provided on the surface of the separator 400. The inorganic coating layer may have a structure in which inorganic particles are bonded to each other by a binder to form an interstitial volume between the particles.

The electrode assembly 100 includes a jelly-roll (wound type) electrode assembly having a structure in which a long sheet-shaped positive electrode plate 200 and negative electrode plate 300 are wound with a separator 400 interposed therebetween, a stack-type (stacked) electrode assembly in which a plurality of positive electrode plates 200 and negative electrode plates 300 cut out in a predetermined size unit are sequentially stacked with a separator 400 interposed therebetween, and a stack/folding type electrode assembly having a structure in which bi-cells or full cells where a positive electrode plate 200 and a negative electrode plate 300 in a predetermined unit are stacked with a separator 400 interposed therebetween are wound. FIG. 2 illustrates a stacked electrode assembly. In this way, the electrode assembly 100 includes at least one positive electrode plate 200, at least one negative electrode plate 300, and a separator 400 interposed therebetween.

The positive electrode tab 500 may be made of a metal material, such as aluminum (Al). The positive electrode tab 500 may extend and protrude from one end of the positive electrode plate 200, or may be welded to one end of the positive electrode plate 200 or bonded using a conductive adhesive. FIG. 2 shows that the positive electrode tab 500 extends and protrudes from one end of the positive electrode plate 200, the positive electrode tab 500 and the positive electrode plate 200 are integrally formed, and the positive electrode tab 500 extends the uncoated portion, which is a portion where the positive electrode active material layer is not formed on the positive electrode current collector. In this case, the positive electrode tab 500 may be made of the same material as the positive electrode current collector, and the thickness of the positive electrode tab 500 may be the same as that of the positive electrode current collector, for example, several tens to hundreds of µm.

The negative electrode tab 600 may be made of a metal material, such as copper (Cu) or nickel (Ni). The negative electrode tab 600 may extend and protrude from one end of the negative electrode plate 300, or may be welded to one end of the negative electrode plate 300 or bonded using a conductive adhesive. FIG. 2 shows that the negative electrode tab 600 extends and protrudes from one end of the negative electrode plate 300, the negative electrode tab 600 and the negative electrode plate 300 are integrally formed, and the negative electrode tab 600 extends the uncoated portion, which is a portion where the negative electrode active material layer is not formed on the negative electrode current collector. **In** this case, the negative electrode tab 600 may be made of the same material as the negative electrode current collector, and the thickness of the negative electrode tab 600 may be the same as that of the negative electrode current collector, for example, several tens to hundreds of µm.

Although it may vary depending on the type of the electrode assembly 100, the positive electrode plate 200 and the negative electrode plate 300 included in the electrode assembly 100 may have dozens of sheets, respectively. A plurality of positive electrode tabs 500 and negative electrode tabs 600 are welded in a state where dozens of the same polarity are overlapped in a thickness direction of the battery to form a tab welding portion 800. The thickness of one positive electrode tab 500 or negative electrode tab 600 is as thin as tens to hundreds of µm, but when dozens of them are overlapped and agglomerated by welding, the thickness may be as thick as hundreds of µm to several mm, and accordingly, the tab welding portion 800 may have rigidity enough to serve as an electrode lead by itself. Therefore, in the electrode assembly 100 according to the present disclosure, there is no need to separately attach an electrode lead to which a bus bar (not shown) is electrically connected to the tab welding portion 800, and the tab welding portion 800 itself plays a role in conducting electricity to the outside. The length dimension of the tab welding portion 800 serving as an electrode lead may be managed by cutting the tab welding portion 800 after welding the positive electrode tab 500 or the negative electrode tab 600 is completed.

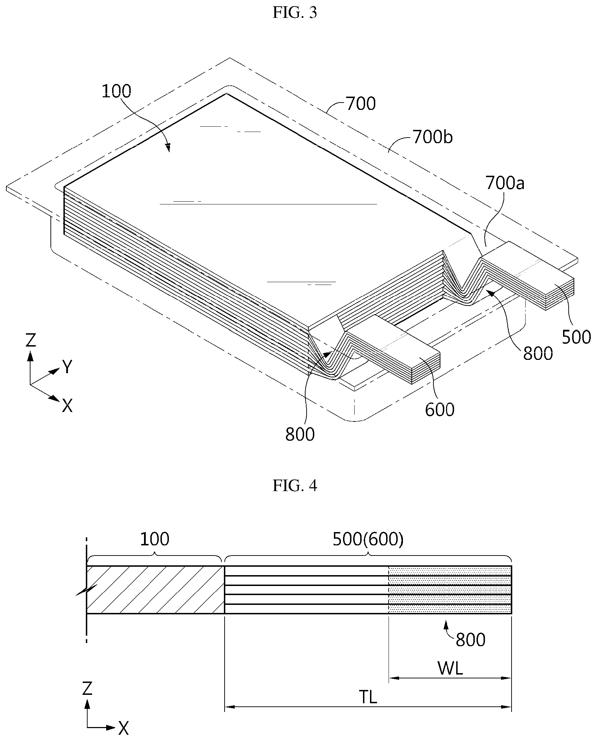

FIG. 3 is a perspective view of a secondary battery according to an embodiment of the present invention.

Referring to FIG. 3, the secondary battery includes an electrode assembly 100 and a case 700 accommodating the electrode assembly 100. The case 700 accommodates the electrode assembly 100, but portions of the positive electrode tab 500 and the negative electrode tab 600 are exposed to the outside of the case 700, especially the tab welding portion 800 is exposed to replace the electrode lead playing a role in conducting electricity to the outside.

As described above, each of the positive electrode tab 500 and the negative electrode tab 600 may extend from one end of the positive electrode plate 200 and the negative electrode plate 300, or as another example, may be attached to the positive electrode plate 200 or the negative electrode plate 300 by ultrasonic welding or laser welding.

Since the positive electrode tab 500 and the negative electrode tab 600 partially exposed to the outside of the case 700 are welded in a state in which a plurality of, for example, dozens of positive electrode tabs 500 and negative electrode tabs 600 are overlapped in a thickness direction of the battery, only a plurality of overlapped electrode tabs welded to each other may exhibit sufficient rigidity without the need to weld a member such as a separate electrode lead, thereby serving as an electrode lead.

The positive electrode tab 500 and the negative electrode tab 600 include a tab welding portion 800 in which a plurality of positive electrode tabs 500 and negative electrode tabs 600 are welded in a state where the same polarity is overlapped.

In the tab welding portion 800, each of the positive electrode tabs 500 or the negative electrode tabs 600 may be welded by ultrasonic welding or laser welding.

Referring to FIG. 3, the case 700 may include an accommodating portion 700a accommodating the electrode assembly 100 and a sealing portion 700b formed to seal the electrode assembly 100.

In an embodiment of the present disclosure, the case 700 may be provided in the form of a film having a multilayer structure of an outer layer for external impact protection, a metal barrier layer for blocking moisture, and a sealant layer for sealing the case.

The outer layer may include other polyester-based films such as poly(ethylene terephthalate) (PET), polybutylene terephthalate, polyethylene naphthalate, polybutylene naphthalate, copolymerized polyester, polycarbonate, nylon, and the like, and may be composed of a single layer or multiple layers.

The metal barrier layer may include aluminum, copper, or the like.

The sealant layer may include a sealant resin and may be composed of a single layer or multiple layers.

The sealant resin may include polypropylene (PP), acid modified polypropylene (PPa), random polypropylene, ethylene propylene copolymer, or two or more thereof. The ethylene propylene copolymer may include ethylene-propylene rubber, ethylene-propylene block copolymer, and the like, but is not limited thereto.

In an embodiment of the present disclosure, the case 700 may be in the form of a pouch.

In an embodiment of the present disclosure, when the case 700 is in the form of a pouch, it may include an upper pouch and a lower pouch. When the case 700 includes an upper pouch and a lower pouch, the upper pouch and the lower pouch may be fused at the outer circumferential surface, thereby having a structure in which the battery is sealed.

The sealing portion 700b refers to a portion that is fused along the outer circumferential surface of the accommodating portion 700a to seal the electrode assembly 100, and the fusion may be thermal fusion, ultrasonic fusion, or the like, but is not particularly limited as long as the sealing portion 700b may be fused.

The sealing portion 700b may be sealed on four sides or three sides at the edge of the case 700. The three-sided sealing structure means a structure in which the edges of the remaining three sides except the bent portion are sealed in a state where the upper pouch and the lower pouch are formed into one pouch sheet and then the boundary surface of the upper pouch and the lower pouch is bent to overlap the accommodating portions 700a formed in the upper pouch and the lower pouch. FIG. 3 may be referred to as a view showing the accommodating portion 700a formed in the lower pouch before covering the upper pouch.

FIG. 4 is an enlarged view showing a tab welding portion in an embodiment not according to the present invention.

Referring to FIG. 4, in the tab welding portion 800, a length in an extension direction (X-axis direction) of the positive electrode tab 500 or the negative electrode tab 600 may be constant in a thickness direction of the positive electrode tab 500 or the negative electrode tab 600 (Z-axis direction).

In general, among electrode tabs, a portion connected to an electrode assembly receives the greatest stress at a high temperature. Accordingly, when the temperature of the battery rises rapidly due to abnormal operation of the battery, a portion of the electrode tab connected to the electrode assembly may be broken. When designed by actively utilizing the fact that the electrode tab portion may be broken at a certain temperature or higher, it may help to enhance battery safety by forcibly releasing the battery connection structure in the case of an abnormality in which the battery temperature rises.

In an embodiment not according to the present invention, the length WL of the tab welding portion 800 in an extension direction of the positive electrode tab 500 or the negative electrode tab 600 may be 60% or less, 50% to 60%, or 40% to 60% of the length TL of the positive electrode tab 500 or the negative electrode tab 600. That is, the entirety of the positive electrode tab 500 or the negative electrode tab 600 is not welded along the length TL of the positive electrode tab 500 or the negative electrode tab 600, but the direction from the end of the positive electrode tab 500 or the negative electrode tab 600 exposed to the outside of the case 700 toward the sealing portion 700b, that is, when the upper end of the positive electrode tab 500 or the negative electrode tab 600 is referred to as upward, only a portion of the length is welded downward (-X direction), thereby forming the tab welding portion 800 having a length WL shorter than the total length TL of the positive electrode tab 500 or the negative electrode tab 600. The positive electrode tabs 500 or the negative electrode tabs 600 are agglomerated only at the tab welding portion 800, so that the thickness of the agglomerated positive electrode tab 500 or negative electrode tab 600 becomes significantly greater than the thickness of each positive electrode tab 500 or negative electrode tab 600, thereby serving as an electrode lead by securing mechanical rigidity and expanding the current flow path, resulting in no need for a separate electrode lead. The longer the length WL, the larger the welding area, so the mechanical rigidity may be increased, and thus the length WL may be 100% of the length TL considering only the mechanical rigidity, but in this example,

it should be noted that the length WL is 60% or less of the length TL, that is, the upper limit of the length WL is set, whereby the portion of the positive electrode tab 500 or the negative electrode tab 600 that is not welded below the tab welding portion 800 (-X direction) remains. In the longitudinal direction of the positive electrode tab 500 or the negative electrode tab 600, the portion adjacent to the electrode assembly 100 is not agglomerated with other positive electrode tabs 500 or negative electrode tabs 600, but maintained in each thin positive electrode tab 500 or negative electrode tab 600. Since the amount of deformation of this portion is large at a high temperature, the positive electrode tab 500 or the negative electrode tab 600 may be broken at any part of the corresponding portion to form a disconnection portion. The high temperature here may be, for example, 80°C. Considering only the case of being easily broken, a shorter length WL is advantageous, but a lower limit of the length WL is required in order for the tab welding portion 800 to have mechanical rigidity enough to replace the electrode lead. In addition, the lower limit of the length WL may be changed if the temperature at which the disconnection portion is formed is set lower or higher than 80°C. In this embodiment, the length of the portion of the positive electrode tab 500 or the negative electrode tab 600 remaining unwelded is also controlled by setting the length WL to 40% or more of the length TL. That is, the length WL of the tab welding portion 800 is characterized in that the unwelded portion of the positive electrode tab 500 and the negative electrode tab 600 is controlled and designed to have the amount of deformation capable of forming a disconnection portion at a high temperature.

When the length WL of the tab welding portion 800 in an extension direction of the positive electrode tab 500 or the negative electrode tab 600 satisfies the above-defined range in this way, the electrode tab may have sufficient rigidity, and the contact between the electrode assembly 100 and the positive electrode tab 500 or the negative electrode tab 600 may be easily broken as the amount of deformation of the positive electrode tab 500 or the negative electrode tab 600 is large at a high temperature, thereby making it easier to improve the safety of the battery.

For example, the length WL of the tab welding portion 800 in an extension direction of the positive electrode tab 500 or the negative electrode tab 600 may be 16 mm. For example, when the length TL of the positive electrode tab 500 or the negative electrode tab 600 is 27 mm, if the length WL is 60% of the length TL, the length WL is 16 mm.

As in the present example, the method of forming the tab welding portion 800 having a constant length WL in a thickness direction of the positive electrode tab 500 or the negative electrode tab 600 may be performed, for example, by positioning the welding device in a vertical direction of the overlapping portion in a state where the positive electrode tab 500 or the negative electrode tab 600 is overlapped in a thickness direction of the battery and welding while moving the welding device along the longitudinal direction.

According to the invention, the length of the tab welding portion 800 in an extension direction of the positive electrode tab 500 or the negative electrode tab 600 is different in a thickness direction of the positive electrode tab 500 or the negative electrode tab 600. When the length of the tab welding portion 800 varies in a thickness direction of the electrode tab, it may be easy to design the tab welding portion 800 to be broken at a desired design value for the stress applied to the electrode tab.

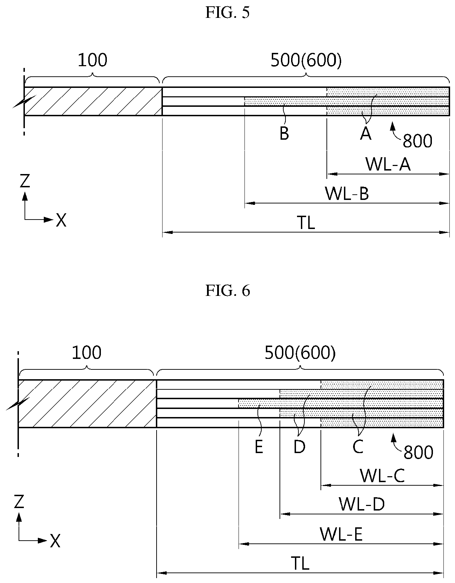

For example, the length of the tab welding portion 800 in an extension direction of the positive electrode tab 500 or the negative electrode tab 600 may be increased from the surface of the tab welding portion 800 toward the thickness direction of the tab welding portion 800. That is, the length of the central portion of the thickness of the tap welding portion 800 may be the longest. When the length of the central portion of the thickness of the tab welding portion 800 is the longest, as verified in the simulation experiment to be described later, the contact between the electrode assembly 100 and the positive electrode tab 500 or the negative electrode tab 600 may be more easily broken as the amount of deformation of the positive electrode tab 500 or the negative electrode tab 600 is large at a high temperature. This will be described in more detail with reference to FIGS. 5 and 6 below.

Alternatively, the length of the tab welding portion 800 in an extension direction of the positive electrode tab 500 or the negative electrode tab 600 may be decreased from the surface of the tab welding portion 800 toward the thickness direction of the tab welding portion 800. That is, the length of the central portion of the thickness of the tab welding portion 800 may be the shortest.

The method of forming a tab welding portion 800 in which the length of the tab welding portion 800 in an extension direction of the positive electrode tab 500 or the negative electrode tab 600 varies in a thickness direction of the positive electrode tab 500 or the negative electrode tab 600 is not a method of forming the tab welding portion 800 at once by gathering electrode tabs and welding them together, but may be a method of dividing the welding several times in such a way that some of the positive electrode tabs 500 or negative electrode tabs 600 are welded in an overlapped state in a thickness direction of the battery and then another positive electrode tab 500 or negative electrode tab 600 placed above or below the welded tabs is welded by a welding length different from that of the previous welding in further overlapped state in a thickness direction of the battery. As another example, the welding is performed by positioning the welding device in the vertical direction of the overlapping portion in a state where the positive electrode tab 500 or the negative electrode tab 600 is overlapped in a thickness direction of the battery and adjusting conditions so that the deep heat generated by welding is greatest at the middle portion, whereby it is possible to form the longest welding portion at the middle portion in a thickness direction of the battery. As still another example, the welding is performed by positioning a laser welding device at the end of the positive electrode tab 500 or the negative electrode tab 600 in a state where the positive electrode tab 500 or the negative electrode tab 600 is overlapped in a thickness direction of the battery and irradiating a laser beam in a direction toward the electrode assembly 100, whereby it is also possible to form the longest welding portion at the middle portion in a thickness direction of the battery.

FIG. 5 is an enlarged view showing a tab welding portion according to an embodiment of the present invention.

In an embodiment of the present invention shown in FIG. 5, the tab welding portion 800 may include a first tab welding portion A in contact with the surface of the tab welding portion 800, and a second tab welding portion B not in contact with the surface of the tab welding portion 800 and located on the opposite side of the first tap welding portion A. In addition, the length WL_B of the second tab welding portion B in an extension direction of the positive electrode tab 500 or the negative electrode tab 600 may be longer than the length WL_A of the first tab welding portion A in an extension direction of the positive electrode tab 500 or the negative electrode tab 600 (WL_B > WL_A). When the tab welding portion 800 has the above-described structure, the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In an embodiment of the present invention, under the condition that the length WL_B is longer than the length WL_A, the length WL_B of the second tab welding portion B in an extension direction of the positive electrode tab 500 or the negative electrode tab 600 may be 40% or more of the length TL of the positive electrode tab 500 or the negative electrode tab 600. The length WL_B may be 90% or less of the length TL. When the length WL_B of the second tab welding portion B satisfies the above-defined range, mechanical rigidity is secured and the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In an embodiment of the present invention, under the condition that the length WL_B is longer than the length WL_A, the length WL_A of the first tab welding portion A in an extension direction of the positive electrode tab 500 or the negative electrode tab 600 may be 60% or less of the length TL of the positive electrode tab 500 or the negative electrode tab 600. The length WL_A may be 30% or more of the length TL. When the length WL_A of the first tab welding portion A satisfies the above-defined range, mechanical rigidity is secured and the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

For example, the length WL_A of the first tab welding portion A in an extension direction of the positive electrode tab 500 or the negative electrode tab 600 may be 30% of the length TL of the positive electrode tab 500 or the negative electrode tab 600, and the length WL_B of the second tab welding portion B in an extension direction of the positive electrode tab 500 or the negative electrode tab 600 may be 40%, 60%, or 90% of the length TL. The length WL_A may be 40% of the length TL, and the length WL_B may be 50%, 60%, or 90% of the length TL. As another example, the length WL_B may be 60% of the length TL and the length WL_B may be 90% of the length TL.

Compared to the case where the length of the tap welding portion is constant in a thickness direction as shown in FIG. 4, in this embodiment, the length WL_A of the first tab welding portion A is shorter than the length WL of the tap welding portion 800, so that the amount of deformation at a high temperature may be further increased in the portion of the electrode tab remaining without forming the first tab welding portion A. The insufficient welding area due to the fact that the length WL_A of the first tab welding portion A is shorter than the length WL of the tab welding portion 800 may be supplemented by making the length WL_B of the second tab welding portion B longer than the length WL of the tab welding portion 800.

For example, the length WL_A of the first tab welding portion A in an extension direction of the positive electrode tab 500 or the negative electrode tab 600 may be 16 mm. For example, when the length TL of the positive electrode tab 500 or the negative electrode tab 600 is 27 mm, if the length WL_A is 60% of the length TL, the length WL_A is 16 mm.

For example, the length WL_B of the second tab welding portion B in an extension direction of the positive electrode tab 500 or the negative electrode tab 600 may be 24 mm. For example, when the length TL of the positive electrode tab 500 or the negative electrode tab 600 is 27 mm, if the length WL_B is 90% of the length TL, the length WL_B is 24 mm.

FIG. 6 is an enlarged view showing a tab welding portion in still another embodiment of the present invention.

In an embodiment of the present invention, the tab welding portion 800 may include a first tab welding portion C in contact with the surface of the tab welding portion 800; a second tap welding portion D not in contact with the surface of the tab welding portion 800 and located on the opposite side of the first tab welding portion C; and a third tab welding portion E not in contact with the surface of the tab welding portion 800 and located on the opposite side of the second tab welding portion D. In addition, the length WL_E of the third tab welding portion E in an extension direction of the positive electrode tab 500 or the negative electrode tab 600 may be longer than the length WL_D of the second tab welding portion D in an extension direction of the positive electrode tab 500 or the negative electrode tab 600 (WL_E > WL_D). In addition, the length WL_D of the second tab welding portion D in an extension direction of the positive electrode tab 500 or the negative electrode tab 600 may be longer than the length WL_C of the first tab welding portion C in an extension direction of the positive electrode tab 500 or the negative electrode tab 600 (WL_D > WL_C).

When the tab welding portion 800 has the above-described structure, the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In an embodiment of the present invention, the length WL_E of the third tab welding portion E in an extension direction of the positive electrode tab 500 or the negative electrode tab 600 may be 60% or more of the length TL of the positive electrode tab 500 or the negative electrode tab 600. When the length WL_E satisfies the above-defined range, the electrode tab may have sufficient rigidity and the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In an embodiment of the present invention, the length WL_D of the second tab welding portion D in an extension direction of the positive electrode tab 500 or the negative electrode tab 600 may be 40% to 70% of the length TL of the positive electrode tab 500 or the negative electrode tab 600. When the length WL_D satisfies the above-defined range, the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In an embodiment of the present invention, the length WL_C of the first tab welding portion C in an extension direction of the positive electrode tab 500 or the negative electrode tab 600 may be 50% or less of the length TL of the positive electrode tab 500 or the negative electrode tab 600. When the length WL_C satisfies the above-defined range, the amount of deformation of the positive electrode tab 500 or the negative electrode tab 600 is large at a high temperature, whereby the contact between the electrode assembly 100 and the positive electrode tab 500 or the negative electrode tab 600 may be more easily broken, resulting in making it easier to improve the safety of the battery.

In this embodiment, the number of tab welding portions having different lengths is increased as compared to the embodiment described with reference to FIG. 5, and thus there is an advantage of being able to adjust and design the amount of deformation and stress by further subdividing length difference. For example, by making the length WL_C of the first tab welding portion C of the present embodiment shorter than the length WL_A of the first tab welding portion A of the previous embodiment or the length WL of the tab welding portion 800, the amount of deformation at a high temperature in the tab portion remaining without participating in welding may be further increased. The insufficient welding area due to the shortening of the length WL_C of the first tab welding portion C may be supplemented by making the length WL_D of the second tab welding portion D or the length WL_E of the third tab welding portion E longer than the length WL_B of the second tab welding portion B of the previous embodiment or the length WL of the tab welding portion 800.

The length WL_C of the first tab welding portion C in an extension direction of the positive electrode tab 500 or the negative electrode tab 600 may be 10 mm. For example, when the length TL of the positive electrode tab 500 or the negative electrode tab 600 is 27 mm, if the length WL_C is 40% of the length TL, the length WL_C is 10 mm.

The length WL_D of the second tab welding portion D in an extension direction of the positive electrode tab 500 or the negative electrode tab 600 may be 16 mm. For example, when the length TL of the positive electrode tab 500 or the negative electrode tab 600 is 27 mm, if the length WL_D is 60% of the length TL, the length WL_D is 16 mm.

The length WL_E of the third tab welding portion E in an extension direction of the positive electrode tab 500 or the negative electrode tab 600 may be 24 mm. For example, when the length TL of the positive electrode tab 500 or the negative electrode tab 600 is 27 mm, if the length WL_E is 90% of the length TL, the length WL_E is 24 mm.

The secondary battery may be a cylindrical, prismatic, or pouch-type secondary battery. Among them, the secondary battery may be a pouch-type secondary battery. A pouch-type secondary battery is easy to increase the volume ratio, but has a disadvantage in that the pouch itself is difficult to hold the cell. When the temperature of the cell runs away, a pouch-type secondary battery has no thermal stability unlike a cylindrical battery with PTC or CID. According to the present disclosure, it is advantageous in that a safety device is provided even in a pouch-type secondary battery by providing a tab welding portion without an electrode lead and improving it to form a disconnection portion in which the electrode tab portion is cut off at a certain temperature or higher.

In the case of designing the length of the tab welding portion, it was confirmed by simulation experiment whether there is room to break the contact between the electrode assembly and the electrode tab due to deformation of the electrode tab like a kind of bimetal effect when the temperature rises. For easy analysis, the analysis was carried out on the assumption that the length of the electrode assembly was short. The amount of deformation was analyzed given the temperature condition of the electrode tab.

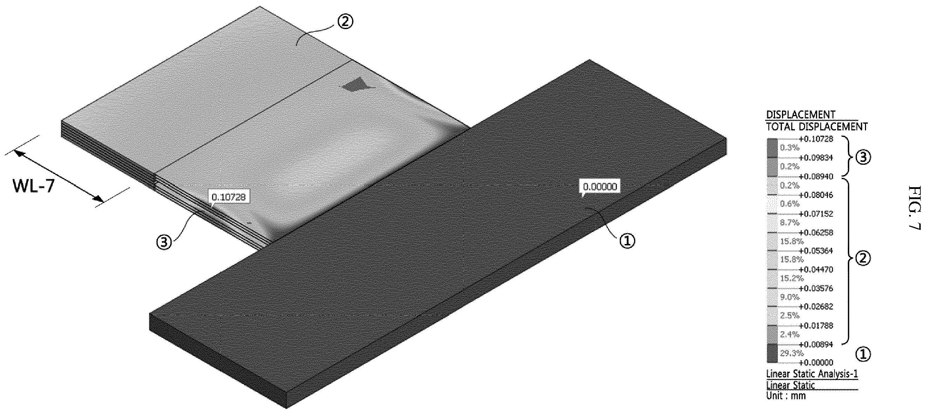

FIGS. 7 to 14 are diagrams showing the amount of deformation and stress analysis results by simulation experiments. In FIGS. 7 to 14, the index for estimating the amount of deformation/stress is shown together at the lower right side, and the amount of deformation/stress increases greater as the index goes from bottom to top (from blue to red in the case of color drawings), (for convenience of reference in the case of black and white drawings), the part with relatively small amount of deformation/stress was written as ①, the part with relatively medium amount of deformation/stress was written as ②, and the part with relatively large amount of deformation/stress was written as ③.

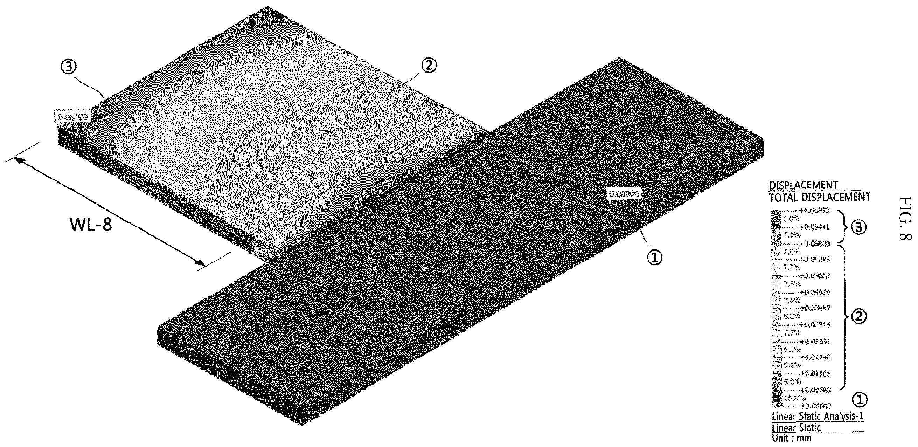

FIGS. 7 and 8 relate to Samples 1 and 2 in which the length of the tab welding portion is constant in a thickness direction as described with reference to FIG. 4, the length WL_7 of the tab welding portion in Sample 1 was shorter than the length WL_8 of the tab welding portion in Sample 2 (WL_7 < WL_8).

Under the temperature condition of 80°C, the amount of deformation on the electrode tab side was calculated to be 107 µm in Sample 1 and 70 µm in Sample 2. In addition, when looking at the amount of deformation distribution of FIGS. 7 and 8, in Sample 1, the part ③ with a large amount of deformation occurs on the side surface of the electrode tab adjacent to the electrode assembly, not the tab welding portion, and in Sample 2, the part ③ with a large amount of deformation occurs at the tab welding portion. Even when looking at the amount of deformation distribution of FIGS. 7 and 8, it seems that the electrode tab is more easily broken in the case of Sample 1 having a short length of the tab welding portion. Also, it can be seen that the disconnection portion may be formed on the side surface of the electrode tab.

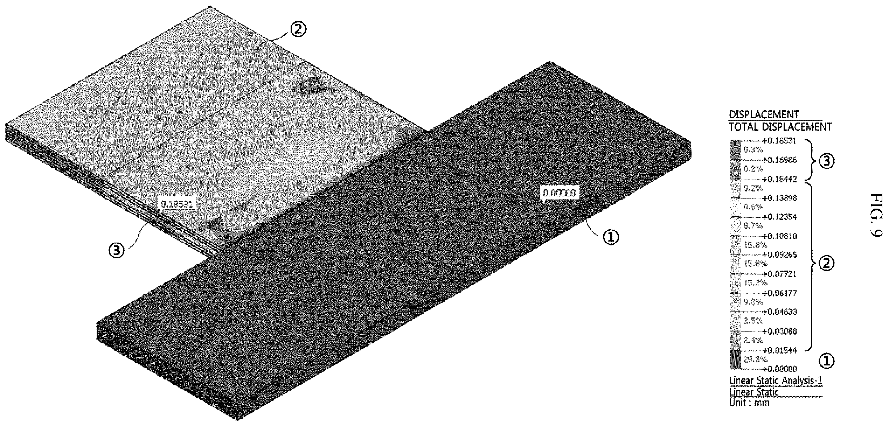

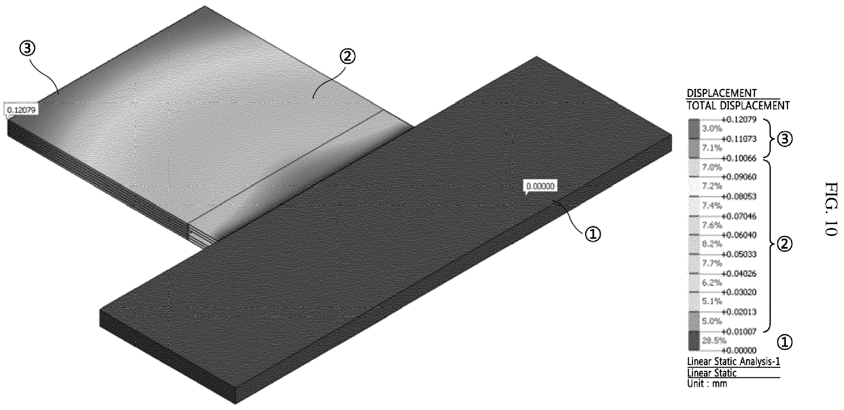

FIGS. 9 and 10 show each case in which Sample 1 and Sample 2 are respectively simulated under the temperature condition of 120°C. When the temperature rises more significantly from 80°C to 120°C, the amount of deformation on the electrode tab side of Sample 1 was calculated to be 185 µm and the amount of deformation on the electrode tab side of Sample 2 was calculated to be 121 µm, so the difference in the amount of deformation between the two was greater at high temperature condition. Referring to FIGS. 9 and 10, in Sample 1, the part ③ with a large amount of deformation occurs on the side surface of the electrode tab adjacent to the electrode assembly, not the tab welding portion, and in Sample 2, the part ③ with a large amount of deformation occurs at the tab welding portion. Therefore, it can be seen that when the temperature further increases, the shorter side of the tab welding portion as shown in Sample 1 will be more easily broken.

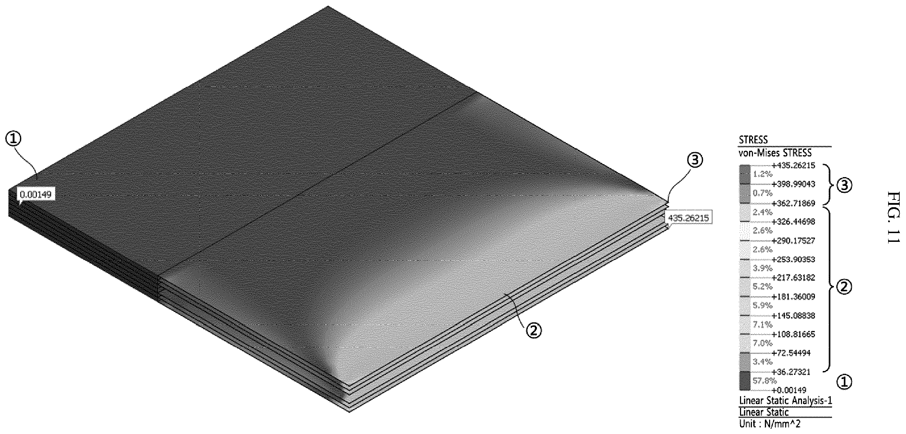

FIG. 11 shows the stress applied to the electrode tab under the temperature condition of 120°C in Sample 1. It can be seen that the stress applied to the electrode tab is generally large in the portion where the electrode tab is connected to the cell, from the fact that the large stress part (3) and the medium stress part (2) are distributed at the corresponding locations. The maximum stress was calculated to be 435 MPa. This part is highly likely to be broken when the temperature rises sharply in the future. Therefore, as proposed in the present disclosure, if the tab welding portion is formed at the end of the electrode tab and the portion where the electrode tab is connected to the electrode assembly is left unwelded, it can be confirmed that the safety against high temperatures may be greatly enhanced during use of the battery.

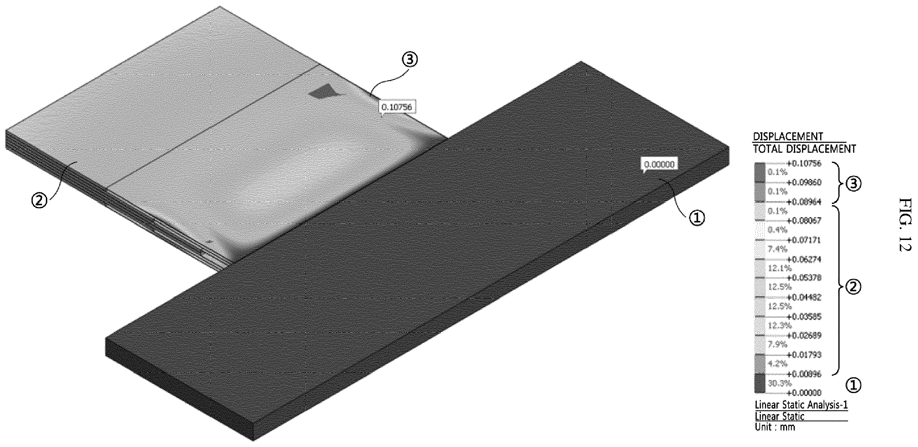

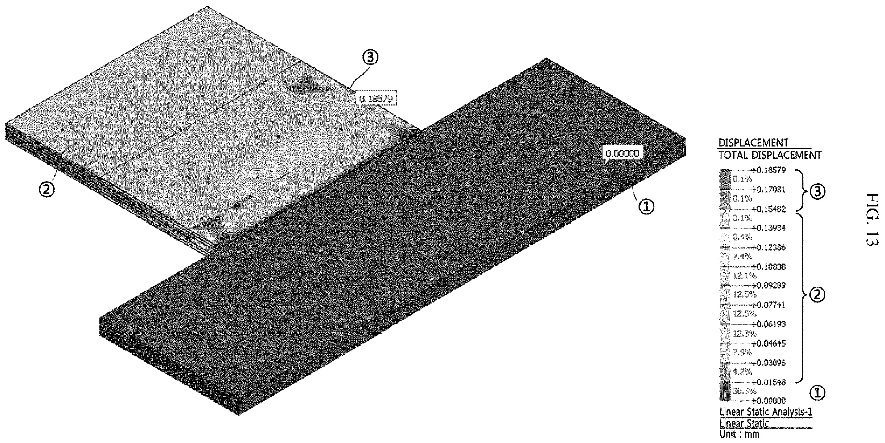

FIG. 12 is a simulation result under the temperature condition of 80°C for Sample 3 in which the length of the tab welding portion changes in a thickness direction as described with reference to FIGS. 5 and 6, and FIG. 13 is a simulation result under the temperature condition of 120°C. In FIGS. 12 and 13, the part ③ having a large amount of deformation occurs on the side surface of the electrode tab adjacent to the electrode assembly, not the tab welding portion. In FIG. 12, the maximum amount of deformation was 108 µm, and in FIG. 13, the maximum amount of deformation was 186 µm. In the structure such as Sample 3, the length of the tab welding portion increases from the surface of the tab welding portion toward the thickness direction of the tab welding portion and is the longest at the central portion of the thickness of the tab welding portion, thereby resembling a 'mountain' shape. Since the amount of tab deformation is also large at a high temperature in the structure of the tab welding portion as shown in FIGS. 12 and 13, the electrode tab may be deliberately cut to form a disconnection portion when the high temperature is reached, thereby making the secondary battery safe.

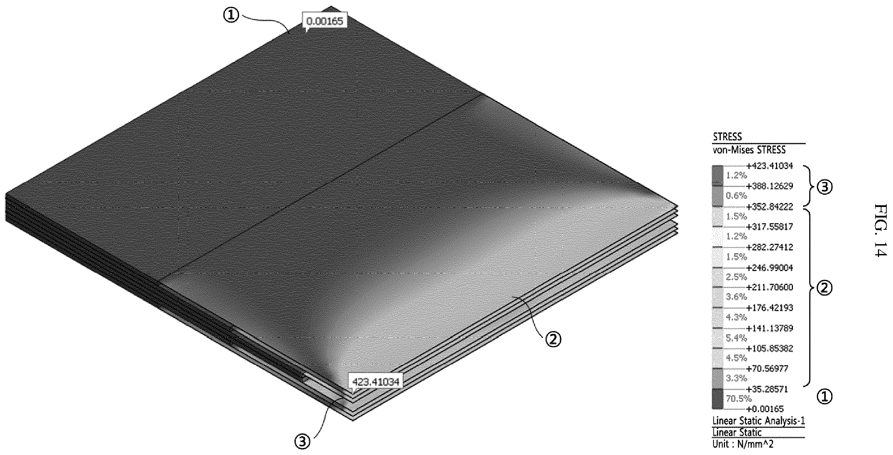

FIG. 14 shows the stress applied to the electrode tab under the temperature condition of 120°C in Sample 3. It is confirmed once again that the stress applied to the electrode tab is generally large in the portion where the electrode tab is connected to the electrode assembly through the locations of the large stress part ③ and the medium stress part ②, and the maximum stress was calculated to be 423 MPa. This part is highly likely to be broken when the temperature rises sharply in the future. Therefore, it can be confirmed that the safety against high temperatures may be greatly enhanced during use of the battery if the tab welding portion is designed as proposed in the present disclosure.

While the present disclosure has been hereinabove described with regard to a limited number of embodiments and drawings, the present disclosure is not limited thereto and it is obvious to those skilled in the art that a variety of modifications and changes may be made thereto within the scope of the appended claims.

### [Reference Signs]

100: electrode assembly
200: positive electrode plate
300: negative electrode plate
400: separator
500: positive electrode tab
600: negative electrode tab
700: case
700a: accommodating portion
700b: sealing portion
800: tab welding portion
A, C: first tab welding portion
B, D: second tab welding portion
E: third tab welding portion

## Claims

1. A secondary battery comprising:
an electrode assembly (100) comprising a plurality of positive electrode plates (200) having a positive electrode tab (500), a plurality of negative electrode plates (300) having a negative electrode tab (600), and a separator (400) interposed between the positive electrode plates (200) and the negative electrode plates (300); and
a case (700) accommodating the electrode assembly (100),
wherein a tab welding portion (800) in which the positive electrode tabs (500) and
the negative electrode tabs (600) are welded in a state where a plurality of identical polarities are overlapped is provided,
and wherein the tab welding portion (800) is exposed to the outside of the case (700) and forms an electrode lead,**characterized in that**
the length of the tab welding portion (800) in an extension direction of the positive electrode tab (500) or the negative electrode tab (600) varies in a thickness direction of the positive electrode tab (500) or the negative electrode tab (600).

2. The secondary battery according to claim 1,
wherein the tab welding portion (800) comprises a first tab welding portion (A, C) in contact with the surface of the tab welding portion (800), and a second tab welding portion (B, D) not in contact with the surface of the tab welding portion (800) and located on the opposite side of the first tab welding portion (A, C),
wherein the length of the second tab welding portion (B, D) in an extension direction Reply to communication pursuant to Article 94(3) EPC dated February 5, 2025
of the positive electrode tab (500) or the negative electrode tab (600) is longer than the length of the first tab welding portion (A, C) in an extension direction of the positive electrode tab (500) or the negative electrode tab (600).

3. The secondary battery according to claim 2,
wherein the length of the second tab welding portion (B, D) in an extension direction of the positive electrode tab (500) or the negative electrode tab (600) is 40% to 90% of the length of the positive electrode tab (500) or the negative electrode tab (600).

4. The secondary battery according to claim 2,
wherein the length of the first tab welding portion (A, C) in an extension direction of the positive electrode tab (500) or the negative electrode tab (600) is 30% to 60% of the length of the positive electrode tab (500) or the negative electrode tab (600).

5. The secondary battery according to claim 1,
wherein the tab welding portion (800) comprises:
a first tab welding portion (A, C) in contact with the surface of the tab welding portion (800);
a second tab welding portion (B, D) not in contact with the surface of the tab welding portion (800) and located on the opposite side of the first tab welding portion (A, C); and
a third tab welding portion (E) not in contact with the surface of the tab welding portion (800) and located on the opposite side of the second tab welding portion (B, D),
wherein the length of the third tab welding portion (E) in an extension direction of Reply to communication pursuant to Article 94(3) EPC dated February 5, 2025
the positive electrode tab (500) or the negative electrode tab (600) is longer than the length of the second tab welding portion (B, D) in an extension direction of the positive electrode tab (500) or the negative electrode tab (600), and
the length of the second tab welding portion (B, D) in an extension direction of the positive electrode tab (500) or the negative electrode tab (600) is longer than the length of the first tab welding portion (A, C) in an extension direction of the positive electrode tab (500) or the negative electrode tab (600).

6. The secondary battery according to claim 5,
wherein the length of the third tab welding portion (E) in an extension direction of the positive electrode tab (500) or the negative electrode tab (600) is 60% or more of the length of the positive electrode tab (500) or the negative electrode tab (600).

7. The secondary battery according to claim 5,
wherein the length of the second tab welding portion (B, D) in an extension direction of the positive electrode tab (500) or the negative electrode tab (600) is 40% to 70% of the length of the positive electrode tab (500) or the negative electrode tab (600).

8. The secondary battery according to claim 5,
wherein the length of the first tab welding portion (A, C) in an extension direction of the positive electrode tab (500) or the negative electrode tab (600) is 50% or less of the length of the positive electrode tab (500) or the negative electrode tab (600).

9. The secondary battery according to claim 1,
wherein the length of the tab welding portion (800) in an extension direction of the positive electrode tab (500) or the negative electrode tab (600) increases from the surface of the tab welding portion (800) toward a thickness direction of the tab welding portion (800).

10. The secondary battery according to claim 9,
wherein the length of the tab welding portion (800) in an extension direction of the positive electrode tab (500) or the negative electrode tab (600) is the longest at a central portion of the thickness of the tab welding portion (800).

## Patentansprüche

1. Sekundärbatterie, umfassend: eine Elektrodenanordnung (100), umfassend eine Vielzahl von positiven Elektrodenplatten (200), die eine positive Elektrodenlasche (500) aufweist, eine Vielzahl von negativen Elektrodenplatten (300), die eine negative Elektrodenlasche (600) aufweist, und einen Separator (400), der zwischen den positiven Elektrodenplatten (200) und den negativen Elektrodenplatten (300) angeordnet ist; und ein Gehäuse (700), das die Elektrodenanordnung (100) aufnimmt, wobei ein Laschenschweißabschnitt (800) vorgesehen ist, in dem die positiven Elektrodenlaschen (500) und die negativen Elektrodenlaschen (600) in einem Zustand geschweißt sind, in dem eine Vielzahl identischer Polaritäten überlappt sind, und wobei der Laschenschweißabschnitt (800) zur Außenseite des Gehäuses (700) freiliegt und einen Elektrodenableiter bildet, **dadurch gekennzeichnet, dass** die Länge des Laschenschweißabschnitts (800) in einer Erstreckungsrichtung der positiven Elektrodenlasche (500) oder der negativen Elektrodenlasche (600) in einer Dickenrichtung der positiven Elektrodenlasche (500) oder der negativen Elektrodenlasche (600) variiert.

2. Sekundärbatterie nach Anspruch 1, wobei der Laschenschweißabschnitt (800) einen ersten Laschenschweißabschnitt (A, C), der in Kontakt mit der Oberfläche des Laschenschweißabschnitts (800) steht, und einen zweiten Laschenschweißabschnitt (B, D), der nicht in Kontakt mit der Oberfläche des Laschenschweißabschnitts (800) steht und auf der gegenüberliegenden Seite des ersten Laschenschweißabschnitts (A, C) angeordnet ist, umfasst, wobei die Länge des zweiten Laschenschweißabschnitts (B, D) in einer Erstreckungsrichtung der positiven Elektrodenlasche (500) oder der negativen Elektrodenlasche (600) länger ist als die Länge des ersten Laschenschweißabschnitts (A, C) in einer Erstreckungsrichtung der positiven Elektrodenlasche (500) oder der negativen Elektrodenlasche (600).

3. Sekundärbatterie nach Anspruch 2, wobei die Länge des zweiten Laschenschweißabschnitts (B, D) in einer Erstreckungsrichtung der positiven Elektrodenlasche (500) oder der negativen Elektrodenlasche (600) 40 % bis 90 % der Länge der positiven Elektrodenlasche (500) oder der negativen Elektrodenlasche (600) beträgt.

4. Sekundärbatterie nach Anspruch 2, wobei die Länge des ersten Laschenschweißabschnitts (A, C) in einer Erstreckungsrichtung der positiven Elektrodenlasche (500) oder der negativen Elektrodenlasche (600) 30 % bis 60 % der Länge der positiven Elektrodenlasche (500) oder der negativen Elektrodenlasche (600) beträgt.

5. Sekundärbatterie nach Anspruch 1, wobei der Laschenschweißabschnitt (800) umfasst: einen ersten Laschenschweißabschnitt (A, C), der in Kontakt mit der Oberfläche des Laschenschweißabschnitts (800) steht; einen zweiten Laschenschweißabschnitt (B, D), der nicht in Kontakt mit der Oberfläche des Laschenschweißabschnitts (800) steht und auf der gegenüberliegenden Seite des ersten Laschenschweißabschnitts (A, C) angeordnet ist; und einen dritten Laschenschweißabschnitt (E), der nicht in Kontakt mit der Oberfläche des Laschenschweißabschnitts (800) steht und auf der gegenüberliegenden Seite des zweiten Laschenschweißabschnitts (B, D) angeordnet ist, wobei die Länge des dritten Laschenschweißabschnitts (E) in einer Erstreckungsrichtung der positiven Elektrodenlasche (500) oder der negativen Elektrodenlasche (600) länger ist als die Länge des zweiten Laschenschweißabschnitts (B, D) in einer Erstreckungsrichtung der positiven Elektrodenlasche (500) oder der negativen Elektrodenlasche (600), und die Länge des zweiten Laschenschweißabschnitts (B, D) in einer Erstreckungsrichtung der positiven Elektrodenlasche (500) oder der negativen Elektrodenlasche (600) länger ist als die Länge des ersten Laschenschweißabschnitts (A, C) in einer Erstreckungsrichtung der positiven Elektrodenlasche (500) oder der negativen Elektrodenlasche (600).

6. Sekundärbatterie nach Anspruch 5, wobei die Länge des dritten Laschenschweißabschnitts (E) in einer Erstreckungsrichtung der positiven Elektrodenlasche (500) oder der negativen Elektrodenlasche (600) 60 % oder mehr der Länge der positiven Elektrodenlasche (500) oder der negativen Elektrodenlasche (600) beträgt.

7. Sekundärbatterie nach Anspruch 5, wobei die Länge des zweiten Laschenschweißabschnitts (B, D) in einer Erstreckungsrichtung der positiven Elektrodenlasche (500) oder der negativen Elektrodenlasche (600) 40 % bis 70 % der Länge der positiven Elektrodenlasche (500) oder der negativen Elektrodenlasche (600) beträgt.

8. Sekundärbatterie nach Anspruch 5, wobei die Länge des ersten Laschenschweißabschnitts (A, C) in einer Erstreckungsrichtung der positiven Elektrodenlasche (500) oder der negativen Elektrodenlasche (600) 50 % oder weniger der Länge der positiven Elektrodenlasche (500) oder der negativen Elektrodenlasche (600) beträgt.

9. Sekundärbatterie nach Anspruch 1, wobei die Länge des Laschenschweißabschnitts (800) in einer Erstreckungsrichtung der positiven Elektrodenlasche (500) oder der negativen Elektrodenlasche (600) von der Oberfläche des Laschenschweißabschnitts (800) in eine Dickenrichtung des Laschenschweißabschnitts (800) zunimmt.

10. Sekundärbatterie nach Anspruch 9, wobei die Länge des Laschenschweißabschnitts (800) in einer Erstreckungsrichtung der positiven Elektrodenlasche (500) oder der negativen Elektrodenlasche (600) an einem mittleren Abschnitt der Dicke des Laschenschweißabschnitts (800) am längsten ist.

## Revendications

1. Batterie secondaire comprenant :
un ensemble d'électrodes (100) comprenant une pluralité de plaques d'électrode positive (200) ayant une languette d'électrode positive (500), une pluralité de plaques d'électrode négative (300) ayant une languette d'électrode négative (600), et un séparateur (400) interposé entre les plaques d'électrode positive (200) et les plaques d'électrode négative (300) ; et
un boîtier (700) logeant l'ensemble d'électrodes (100),
dans laquelle une partie de soudage de languette (800) dans laquelle les languettes d'électrode positive (500) et les languettes d'électrode négative (600) sont soudées dans un état où une pluralité de polarités identiques se chevauchent est prévue, et
dans laquelle la partie de soudage de languette (800) est exposée à l'extérieur du boîtier (700) et forme une sortie d'électrode, **caractérisée en ce que**
la longueur de la partie de soudage de languette (800) dans une direction d'extension de la languette d'électrode positive (500) ou de la languette d'électrode négative (600) varie dans une direction de l'épaisseur de la languette d'électrode positive (500) ou de la languette d'électrode négative (600).

2. Batterie secondaire selon la revendication 1,
dans laquelle la partie de soudage de languette (800) comprend une première partie de soudage de languette (A, C) en contact avec la surface de la partie de soudage de languette (800), et une deuxième partie de soudage de languette (B, D) non en contact avec la surface de la partie de soudage de languette (800) et située sur le côté opposé de la première partie de soudage de languette (A, C),
dans laquelle la longueur de la deuxième partie de soudage de languette (B, D) dans une direction d'extension de la languette d'électrode positive (500) ou de la languette d'électrode négative (600) est plus grande que la longueur de la première partie de soudage de languette (A, C) dans une direction d'extension de la languette d'électrode positive (500) ou de la languette d'électrode négative (600).

3. Batterie secondaire selon la revendication 2,
dans laquelle la longueur de la deuxième partie de soudage de languette (B, D) dans une direction d'extension de la languette d'électrode positive (500) ou de la languette d'électrode négative (600) est de 40 % à 90 % de la longueur de la languette d'électrode positive (500) ou de la languette d'électrode négative (600).

4. Batterie secondaire selon la revendication 2,
dans laquelle la longueur de la première partie de soudage de languette (A, C) dans une direction d'extension de la languette d'électrode positive (500) ou de la languette d'électrode négative (600) est de 30 % à 60 % de la longueur de la languette d'électrode positive (500) ou de la languette d'électrode négative (600).

5. Batterie secondaire selon la revendication 1,
dans laquelle la partie de soudage de languette (800) comprend :
une première partie de soudage de languette (A, C) en contact avec la surface de la partie de soudage de languette (800) ;
une deuxième partie de soudage de languette (B, D) non en contact avec la surface de la partie de soudage de languette (800) et située sur le côté opposé de la première partie de soudage de languette (A, C) ; et
une troisième partie de soudage de languette (E) non en contact avec la surface de la partie de soudage de languette (800) et située sur le côté opposé de la deuxième partie de soudage de languette (B, D),
dans laquelle la longueur de la troisième partie de soudage de languette (E) dans une direction d'extension de la languette d'électrode positive (500) ou de la languette d'électrode négative (600) est plus grande que la longueur de la deuxième partie de soudage de languette (B, D) dans une direction d'extension de la languette d'électrode positive (500) ou de la languette d'électrode négative (600), et
la longueur de la deuxième partie de soudage de languette (B, D) dans une direction d'extension de la languette d'électrode positive (500) ou de la languette d'électrode négative (600) est plus grande que la longueur de la première partie de soudage de languette (A, C) dans une direction d'extension de la languette d'électrode positive (500) ou de la languette d'électrode négative (600).

6. Batterie secondaire selon la revendication 5,
dans laquelle la longueur de la troisième partie de soudage de languette (E) dans une direction d'extension de la languette d'électrode positive (500) ou de la languette d'électrode négative (600) est de 60 % ou plus de la longueur de la languette d'électrode positive (500) ou de la languette d'électrode négative (600).

7. Batterie secondaire selon la revendication 5,
dans laquelle la longueur de la deuxième partie de soudage de languette (B, D) dans une direction d'extension de la languette d'électrode positive (500) ou de la languette d'électrode négative (600) est de 40 % à 70 % de la longueur de la languette d'électrode positive (500) ou de la languette d'électrode négative (600).

8. Batterie secondaire selon la revendication 5,
dans laquelle la longueur de la première partie de soudage de languette (A, C) dans une direction d'extension de la languette d'électrode positive (500) ou de la languette d'électrode négative (600) est de 50 % ou moins de la longueur de la languette d'électrode positive (500) ou de la languette d'électrode négative (600).

9. Batterie secondaire selon la revendication 1,
dans laquelle la longueur de la partie de soudage de languette (800) dans une direction d'extension de la languette d'électrode positive (500) ou de la languette d'électrode négative (600) augmente depuis la surface de la partie de soudage de languette (800) vers une direction de l'épaisseur de la partie de soudage de languette (800).

10. Batterie secondaire selon la revendication 9,
dans laquelle la longueur de la partie de soudage de languette (800) dans une direction d'extension de la languette d'électrode positive (500) ou de la languette d'électrode négative (600) est la plus grande au niveau d'une partie centrale de l'épaisseur de la partie de soudage de languette (800).
